# FASCICULE DE BREVET EUROPEEN

(11) **EP 0 437 403 B1**
(45) Date de publication et mention de la délivrance du brevet: **01.09.1993**
(21) Numéro de dépôt: 91400047.6
(22) Date de dépôt: 11.01.1991
(51) Int. Cl.: A23L 1/0562, A23L 1/054, A23L 1/0532, A23D 7/00

(54) **Composition stabilisante et émulsifiante pour la préparation de pâtes à tartiner allégées en matière grasse**
Stabilisierungs- und emulgierende Zusammensetzung für Brotaufstriche mit niedrigem Fettgehalt
Stabilizing and emulsifying composition for preparing low-fat spreads

(30) Priorité: 11.01.1990 FR 9000299
(43) Date de publication de la demande: 17.07.1991
(73) Titulaire: ELF SANOFI, 75008 Paris (FR)
(72) Inventeur: Poppe, Jan, B-9920 Lovendegem (BE); Rizotti, Robert, F-50500 Carentan (FR); Tilly, Gérard, F-50500 Carentan (FR)
(74) Mandataire: Gillard, Marie-Louise

(56) Documents cités:
- FR-A- 2 622 198
- GB-A- 2 110 517
- GB-A- 2 205 849
- PATENT ABSTRACTS OF JAPAN vol. 11, no. 75 (C-408)(2522) 06 mars 1987, & JP-A-61 231 967

## Description

La présente invention concerne une composition utile pour la préparation des pâtes à tartiner allégées qui ne comprennent que 20 à 50 % en poids de matières grasses, alors que le beurre ou la margarine en contiennent environ 80 %.

Le consommateur demande, de plus en plus, ce type de produit à saveur agréable mais appauvri en matière grasse, afin de diminuer, sans modifier en apparence son régime alimentaire, l'apport calorique, générateur de surcharges pondérales et l'apport lipidique, réputé favoriser les maladies cardiovasculaires.

Ainsi, on trouve déjà sur le marché des succédanés de beurre ou de margarine, ou des produits tartinables allégés aromatisés au fromage, au poisson, à la viande ou aux fruits à étaler sur le pain ou sur des articles de biscuiterie salés ou sucrés.

Ces produits, qui sont essentiellement des émulsions d'eau dans l'huile, doivent être solides mais tartinables à leur température d'utilisation entre 25° et 15°C, ou même moins et ne pas démixer dans la gamme de température où ils peuvent se trouver, c'est-à-dire entre 3-4°C, leur température de conservation en réfrigérateur, et la température ambiante qui peut parfois atteindre 30°C, ou même entre -20°C et 30°C en cas de congélation.

Pour éviter la rupture de l'émulsion, avec la libération de gouttelettes aqueuses, lorsque la pâte est portée à ces températures extrêmes ou après son étalement en couches minces et obtenir des produits de consistance et de goût convenable, on introduit, dans la phase aqueuse, des composés épaississants et des gélifiants tels que des protéines, en général issues du lait, de la gélatine et des polysaccharides parmi lesquels on peut citer les carraghénanes, les alginates, le xanthane, la pectine, les amidons ou les carboxyméthylcelluloses, ainsi que des émulsifiants tels que des phospholipides d'origine animale ou végétale, ou des mono ou diglycérides d'acide gras, saturés ou non.

Ainsi une pâte à tartiner classique pourra être composée d'environ 40 % de matières grasses d'origine animale ou végétale, de 0 à 8 % de protéines de lait, de 0,5 à 3 % d'épaississants et gélifiants, de 0,1 à 0,5 % d'émulsifiants, de 0,1 à 1 % de chlorure de sodium et de 45 à 60 % d'eau, ainsi qu'éventuellement d'arômes, de colorants, d'acides et de conservateurs.

Les caractéristiques physiques des pâtes allégées dépendent essentiellement de la composition de la matière grasse et de la nature des agents épaississants et gélifiants de la phase aqueuse et le fabricant doit choisir parmi les matières premières qui lui sont proposées sur le marché, celles qui seules ou en combinaison donneront une texture et une plasticité convenable, une fusion à température supérieure à la température ambiante mais proche de celle régnant dans la bouche et un goût neutre; il cherchera aussi un prix de revient minimal et préférera les matières premières peu coûteuses, utilisables en faible concentration.

Certaines qualités de gélatine, celles dont la force en gelée est supérieure à 230 blooms et mieux comprise entre 250 et 270 blooms, qui ont un point de fusion supérieur à 30°C et une force en gel élevée, permettent d'obtenir des phases aqueuses de caractéristiques physiques convenables lorsqu'elles sont associées à des protéines du lait; il suffit d'introduire de 1 à 3 % (p/v) de gélatine, de préférence de type acide, et de 2 à 5 % de protéines dans la phase aqueuse pour préparer une pâte à tartiner aux caractéristiques acceptables.

Il est par contre difficile d'obtenir une pâte allégée correcte avec des gélatines de qualité plus courante qui ont une force en gel inférieure, comprise entre 60 et 200 blooms, et cela même en augmentant sensiblement la quantité de protéines ou de gélatine dans la phase aqueuse.

La composition selon l'invention, bien qu'à base de gélatine de faible force en gel, ne présente pas ces inconvénients; en outre, même utilisée à faible concentration, de 1 % à 2 % en poids de la phase aqueuse, elle permet d'obtenir une phase aqueuse dont la viscosité est déjà non négligeable à chaud, dès 50°C, et qui s'accroît régulièrement lorsque la température diminue; en outre, lorsque les pâtes à tartiner sont préparées dans des échangeurs à surface raclée, la gamme de température dans laquelle peut être effectuée l'inversion des phases est plus large.

Selon un premier aspect, la présente invention concerne une composition constituée d'un mélange de gélatine - de préférence de type B c'est-à-dire obtenue par hydrolyse basique du collagène - de force en gel comprise entre 100 et 200 blooms, de iota carraghénane et de xanthane, à raison de 70 à 85 % en poids de gélatine, de 7,5 à 15 % en poids de carraghénane et de 7,5 à 15 % en poids de xanthane. Les compositions de l'invention peuvent être préparées par simple mélange à sec des trois poudres en proportions convenables.

Lorsque les poudres n'ont pas des granulométries voisines, pour éviter que la composition ne devienne hétérogène au stockage, on peut granuler les poudres les plus fines afin d'avoir des diamètres proches. En général, ce sont les polysaccharides qui doivent être granulés, et on a trouvé que la granulation en lit d'air fluidisé par pulvérisation d'une solution aqueuse de gélatine hydrolysée, selon un procédé décrit dans la demande EP-A-313.463, donnait d'excellents résultats. La gélatine hydrolysée utilisée pour cette granulation est une gélatine dont la masse moléculaire moyenne a été réduite par hydrolyse acide, basique ou enzymatique de telle sorte qu'elle ne présente plus de force en gel mesurable par la méthode Bloom dans les conditions définies dans la norme française. NF-V 59.001 d'octobre 1982. Les poudres ainsi granulées des polysaccharides purs ou en mélange comportent de 2 % à 10 % en poids de gélatine hydrolysée par rapport au poids de polysaccharide.

On peut aussi modifier la granulométrie des poudres de polysaccharide en enrobant les grains dans un agent émulsifiant; on sait qu'un tel agent est nécessaire à la préparation des émulsions de pâte à tartiner, mais il est soit introduit dans la phase aqueuse, soit dans la phase grasse, juste avant leur mélange. L'enrobage des polysaccharides par l'émulsifiant peut être réalisé par une technique quelconque, mais on préfère mettre en suspension les poudres de polysaccharide dans l'émulsifiant fondu et pulvériser la suspension dans un courant d'air froid pour recueillir les polysaccharides enrobés avec 50 % à 70 % en poids d'émulsifiant par rapport au poids final. Parmi les émulsifiants couramment utilisés dans le domaine et solides à la température ambiante, on préfère utiliser des mono et diglycérides d'acides gras alimentaires séparément ou en mélange. Les compositions obtenues par mélange de ces polysaccharides enrobés avec la gélatine sont homogènes, mais aussi plus faciles à disperser en milieu aqueux.

Dans ce qui suit, on décrit des exemples de composition selon l'invention et la préparation de pâtes à tartiner allégées en matières grasses. Les viscosités des solutions sont mesurées avec un viscomètre de type Brookfield LVT, équipé d'un mobile 3, et tournant à 60 tours/minute. Les forces en gel sont mesurées en appliquant la méthode bloom décrite dans la norme française NF-V 59-001.

### EXEMPLE 1

On mélange 8 g de gélatine de type B de granulométrie inférieure à 0,6 mm, avec 1 g de iota carraghénane et 1 g de xanthane, de granulométries inférieures à 0,15 mm.

La gélatine a une force en gel de 125 blooms.

Le carraghénane, en solution aqueuse à 1,5 % (p/v) contenant 0,75 % NaCl, a un pouvoir gélifiant compris entre 180 et 200, valeur lue par un pénétromètre de type Sommer et Runge (RFA) de réf. 18005, équipé d'une tige de 15 g et d'un corps de pénétration de 35 g.

Le xanthane, en solution aqueuse à 1 % (p/v), contenant 1 % de KCl, a une viscosité à 25°C, mesurée avec l'appareil Brookfield LVT, tournant à 60 tours/minutes, de 1200 à 1600 mPa.s.

La viscosité d'une phase aqueuse préparée par chauffage de 10 g de ce mélange, 30 g de poudre de lait écrémé, 5 g de NaCl et 555 ml d'eau est sensiblement constante entre 80°C et 60°C, de l'ordre de 200 mPa.s; elle croît ensuite légèrement lorsque la température diminue jusque vers 20°C, pour atteindre environ 800 mPa.s, en dessous, elle augmente brutalement pour dépasser 15000 mPa.s vers 12°C.

### EXEMPLE 2

On prépare du iota carraghénane enrobé en dispersant 400 g de la poudre de carraghénane utilisée à l'exemple 1 dans 600 g d'un agent émulsifiant fondu (Admul^{R} MG 4103, commercialisé par PPF Int. (NL)), puis en pulvérisant cette suspension dans un courant d'air froid pour obtenir des billes qui sont tamisées sur un tamis de diamètre de mailles 0,595 mm.

Dans les mêmes conditions, on prépare du xanthane enrobé à partir de 450 g du xanthane utilisé dans l'exemple 1 et 550 g d'agent émulsifiant.

On mélange à sec 630 g de poudre de gélatine de type B de force en gel 125 blooms, 200 g de carraghénane enrobé et 170 g de xanthane enrobé.

Cette composition selon l'invention est utilisée pour préparer une pâte à tartiner à 41 % de matières grasses d'origine végétale: on prépare la phase grasse en mélangeant dans une cuve maintenue à 70°C sous agitation 1,48 kg de graisse de coprah hydrogénée (F = 32°C) et 3,44 kg d'huile de tournesol. Par ailleurs, on prépare la phase aqueuse en dispersant sous forte agitation dans 6,3 kg d'eau à 60°C, 0,6 kg de poudre de protéines laitières, 0,06 kg de chlorure de sodium, 0,024 kg de sorbate de potassium, 0,007 kg de β-carotène et 0,156 kg de composition selon l'invention.

On introduit dans la phase grasse à 55°C la phase aqueuse, à la même température, puis le mélange homogène est introduit dans un échangeur thermique à surface raclée, type Combinator commercialisé par Schoeder (RFA); à la sortie, le mélange traverse un premier refroidisseur, à 20°C, puis il est malaxé dans un texturateur avant de traverser un second refroidisseur; il est ensuite conditionné en barquette à 12°C.

La pâte à tartiner ainsi préparée peut être étalée dès sa sortie du réfrigérateur, il n'y a pas de séparation eau/graisse et elle est agréable à consommer car on n'a pas de sensation de collant, qui masque le goût, et la fusion est agréable en bouche.

On peut préparer une pâte à tartiner présentant les mêmes qualités en remplaçant la matière grasse végétale par 4,92 kg de matière grasse laitière anhydre, fondant à 34°C.

### EXEMPLE 3

On prépare une composition selon l'invention en mélangeant à sec 7,5 g de gélatine d'osséine chaulée (type B) de force en gel 125 blooms avec 1,25 g de poudre de iota carraghénane et 1,25 g de poudre de xanthane.

Une phase aqueuse type est préparée comme décrit à l'exemple 1; la viscosité qui augmente de 200 à 800 mPa.s entre 80°C et 40°C est de 2400 mPa.s vers 20°C puis croît brusquement en dessous de cette température pour atteindre 20000 mPa.s vers 12°C.

Cette composition est utilisée pour préparer une pâte à tartiner à 41 % de matières grasses dont la phase grasse est identique à celle décrite à l'exemple 2, mais dont la phase aqueuse, pour 4,92 kg de phase grasse, est constituée de 0,12 kg de caséinate de sodium, 0,06 kg de chlorure de sodium, 0,024 kg de sorbate de potassium, 0,007 kg de bêta-carotène, 0,120 kg de composition selon l'invention, 0,036 kg d'Admul^{R} MG 4103 et 6,713 kg d'eau.

## Revendications (Revendications pour l'(les) Etat(s) contractant(s) suivant(s): AT, BE, CH, DE, DK, GB, IT, LI, LU, NL, SE)

1. Composition épaississante et gélifiante pour la fabrication de pâtes à tartiner allégées, caractérisées en ce qu'elle comprend de 70 à 85 % en poids de gélatine de force en gel comprise entre 100 et 200 blooms selon la méthode Bloom dans les conditions définies dans la norme française NF-V 59.001 d'octobre 1982, de 7,5 à 15 % en poids de iota carraghénane et de 7,5 à 15 % en poids de xanthane.

2. Composition selon la revendication 1, caractérisée en ce que ladite gélatine est de type B.

3. Composition selon l'une des revendications 1 ou 2, caractérisée en ce que le iota-carraghenane et/ou le xanthane sont granulés avec de la gélatine sans force en gel.

4. Composition selon l'une des revendications 1 ou 2, caractérisée en ce que le iota carraghénane et/ou le xanthane sont enrobés dans un agent émulsifiant solide à la température ambiante.

5. Composition selon la revendication 4, caractérisée en ce que l'agent émulsifiant est constitué de monoglycérides d'acide gras, de diglycérides d'acide gras ou de leurs mélanges.

6. Composition selon l'une quelconque des revendications 1 à 5, caractérisée en ce que la gélatine de type B a une force en gel de 125 blooms selon la méthode bloom dans les conditions définies dans la norme française NF-V 59.001 d'octobre 1982, que le iota carraghénane a un pouvoir gélifiant de 180 à 200 et que le xanthane a une viscosité comprise entre 1200 et 1600 mPa.s.

## Revendications (Revendications pour l'(les) Etat(s) contractant(s) suivant(s): ES)

1. Procédé de préparation d'une composition épaississante et gélifiante pour la fabrication de pâtes à tartiner allégées, comprenant de 70 à 85 % en poids de gélatine de force en gel comprise entre 100 et 200 blooms selon la méthode Bloom dans les conditions définies dans la norme française NF-V 59.001 d'octobre 1982, de 7,5 à 15% en poids de iota carraghénane et de 7,5 à 15% en poids de xanthane, caractérisé en ce qu'on mélange à sec les 3 poudres en proportions convenables.

2. Procédé selon la revendication 1, caractérisé en ce que ladite gélatine est de type B.

3. Procédé selon l'une des revendications 1 ou 2, caractérisé en ce que le iota-carraghénane et/ou le xanthane sont granulés avec de la gélatine sans force en gel.

4. Procédé selon l'une des revendications 1 ou 2, caractérisé en ce que le iota carraghénane et/ou le xanthane sont enrobés dans un agent émulsifiant solide à la température ambiante.

5. Procédé selon la revendication 4, caractérisé en ce que l'agent émulsifiant est constitué de monoglycérides d'acide gras, de diglycérides d'acide gras ou de leurs mélanges.

6. Procédé selon l'une quelconque des revendications 1 à 5, caractérisé en ce que la gélatine de type B a une force en gel de 125 blooms selon la méthode Bloom dans les conditions définies dans la norme française NF-V 59.001 d'octobre 1982, que le iota carraghénane a un pouvoir gélifiant de 180 à 200 et que le xanthane a une viscosité comprise entre 1200 et 1600 mPa.s.

## Patentansprüche (Patentansprüche für folgende(n) Vertragsstaat(en): AT, BE, CH, DE, DK, GB, IT, LI, LU NL, SE)

1. Verdickende und gelbildende Zusammensetzung zur Herstellung von Brotaufstrichen mit verringertem Fettgehalt, dadurch gekennzeichnet, daß sie 70 - 85 Gew.-% Gelatine mit einer Gelstärke (force en gel) zwischen 100 und 200 Bloom, bestimmt gemäß dem Bloom-Verfahren unter den Bedingungen der französischen Norm NF-V-59.001, Oktober 1982, 7,5 - 15 Gew.-% jota-Carragenan und 7,5 - 15 Gew.-% Xanthan enthält.

2. Zusammensetzung nach Anspruch 1, dadurch gekennzeichnet, daß die Gelatine vom Typ B ist.

3. Zusammensetzung nach einem der Ansprüche 1 oder 2, dadurch gekennzeichnet, daß das jota-Carragenan und/oder das Xanthan mit Gelatine ohne Gelkraft granuliert sind.

4. Zusammensetzung nach einem der Ansprüche 1 oder 2, dadurch gekennzeichnet, daß das jota-Carragenan und/oder das Xanthan mit einem bei Umgebungstemperatur festen Emulgiermittel umhüllt sind.

5. Zusammensetzung nach Anspruch 4, dadurch gekennzeichnet, daß das Emulgiermittel aus Fettsäuremonoglyceriden, Fettsäurediglyceriden oder deren Gemischen besteht.

6. Zusammensetzung nach einem der Ansprüche 1 - 5, dadurch gekennzeichnet, daß die Gelatine vom Typ B eine Gelkraft von 125 Bloom, bestimmt gemäß dem Bloom-Verfahren unter den Bedingungen der französischen Industrienorm NF-V-59.001, Oktober 1982, aufweist, daß das jota-Carragenan ein Gelbildungsvermögen von 180 - 200 besitzt und daß das Xanthan eine Viskosität zwischen 1200 und 1600 mPa.s aufweist.

## Patentansprüche (Patentansprüche für folgende(n) Vertragsstaat(en): ES)

1. Verfahren zur Herstellung einer verstärkenden und gelbildenden Zusammensetzung zur Herstellung von Brotaufstrichen mit verringertem Fettgehalt, umfassend 70 - 85 Gew.-% Gelatine mit einer Gelkraft zwischen 100 und 200 Bloom, bestimmt gemäß dem Bloom-Verfahren unter den Bedingungen der französischen Industrienorm NF-V-59.001, Oktober 1982, 7,5 - 15 Gew.-% jota-Carragenan und 7,5 - 15 Gew.-% Xanthan, dadurch gekennzeichnet, daß man die drei pulverförmigen Bestandteile in geeigneten Mengenverhältnissen vermischt.

2. Verfahren nach Anspruch 1, dadurch gekennzeichnet, daß die Gelatine vom Typ B ist.

3. Verfahren mit einem der Ansprüche 1 oder 2, dadurch gekennzeichnet, daß das jota-Carragenan und/oder das Xanthan mit Gelatine ohne Gelkraft granuliert sind.

4. Verfahren nach einem der Ansprüche 1 oder 2, dadurch gekennzeichnet, daß das jota-Carragenan und/oder das Xanthan mit einem bei Umgebungstemperatur festen Emulgiermittel umhüllt sind.

5. Verfahren nach Anspruch 4, dadurch gekennzeichnet, daß das Emulgiermittel aus Fettsäuremonoglyceriden, Fettsäurediglyceriden oder deren Gemischen besteht.

6. Verfahren nach einem der Ansprüche 1 - 5, dadurch gekennzeichnet, daß die Gelatine vom Typ B eine Gelkraft von 125 Bloom, bestimmt gemäß dem Bloom-Verfahren unter den Bedingungen der französischen Industrienorm NF-V-59.001, Oktober 1982, aufweist, daß das jota-Carragenan ein Gelbildungsvermögen von 180 - 200 besitzt und daß das Xanthan eine Viskosität zwischen 1200 und 1600 mPa.s aufweist.

## Claims (Claims for the following Contracting State(s): AT, BE, CH, DE, DK, GB, IT, LI, LU, NL SE)

1. Thickening and gelling composition for the manufacture of low-fat spreads, characterized in that it comprises from 70 to 85% by weight of gelatin with a gel strength of between 100 and 200 blooms, according to the Bloom method under the conditions defined in French standard NF-V 59.001 of October 1982, from 7.5 to 15% by weight of iota-carrageenan and from 7.5 to 15% by weight of xanthan.

2. Composition according to claim 1, characterized in that said gelatin is of the B type.

3. Composition according to one of claims 1 or 2, characterized in that the iota-carrageenan and/or the xanthan are granulated with gelatin which has no gel strength.

4. Composition according to one of claims 1 or 2, characterized in that the iota-carrageenan and/or the xanthan are coated with an emulsifier which is solid at room temperature.

5. Composition according to claim 4, characterized in that the emulsifier consists of fatty acid monoglycerides, fatty acid diglycerides or mixtures thereof.

6. Composition according to any one of claims 1 to 5, characterized in that the type B gelatin has a gel strength of 125 blooms, according to the Bloom method under the conditions defined in French standard NF-V 59.001 of October 1982, that the iota-carrageenan has a gelling power of 180 to 200 and that the xanthan has a viscosity of between 1200 and 1600 mPa.s.

## Claims (Claims for the following Contracting State(s): ES)

1. Process for preparing a thickening and gelling composition for the manufacture of low-fat spreads, comprising from 70 to 85% by weight of gelatin with a gel strength of between 100 and 200 blooms, according to the Bloom method under the conditions defined in French standard NF-V 59.001 of October 1982, from 7.5 to 15% by weight of iota-carrageenan and from 7.5 to 15% by weight of xanthan, characterized in that the 3 powders are dry-mixed in suitable proportions.

2. Process according to claim 1, characterized in that said gelatin is of the B type.

3. Process according to one of claims 1 or 2, characterized in that the iota-carrageenan and/or the xanthan are granulated with gelatin which has no gel strength.

4. Process according to one of claims 1 or 2, characterized in that the iota-carrageenan and/or the xanthan are coated with an emulsifier which is solid at room temperature.

5. Process according to claim 4, characterized in that the emulsifier consists of fatty acid monoglycerides, fatty acid diglycerides or mixtures thereof.

6. Process according to any one of claims 1 to 5, characterized in that the type B gelatin has a gel strength of 125 blooms according to the Bloom method under the conditions defined in French standard NF-V 59.001 of October 1982, that the iota-carrageenan has a gelling power of 180 to 200 and that the xanthan has a viscosity of between 1200 and 1600 mPa.s.
